**Europäisches Patentamt**

**European Patent Office**

**Office européen des brevets**

(19)

(11) Veröffentlichungsnummer : **0 191 914 B2**

(12) # NEUE EUROPÄISCHE PATENTSCHRIFT

(45) Veröffentlichungstag der neuen Patentschrift :
**19.08.92 Patentblatt 92/34**

(51) Int. Cl.⁵ : **H01G 1/035,** H01G 1/14,
H01G 1/02

(21) Anmeldenummer : **85115022.7**

(22) Anmeldetag : **27.11.85**

(54) **Kunststoffolien-Wickelkondensator in Chipbauweise.**

(30) Priorität : **20.02.85 DE 3505883**

(43) Veröffentlichungstag der Anmeldung :
**27.08.86 Patentblatt 86/35**

(45) Bekanntmachung des Hinweises auf die
Patenterteilung :
**08.03.89 Patentblatt 89/10**

(45) Bekanntmachung des Hinweises auf die
Entscheidung über den Einspruch :
**19.08.92 Patentblatt 92/34**

(84) Benannte Vertragsstaaten :
**AT BE CH DE FR GB IT LI LU NL SE**

(56) Entgegenhaltungen :
**EP-A- 0 130 386**
**DE-A- 2 607 083**
**DE-A- 2 844 830**
**DE-A- 3 320 257**

(56) Entgegenhaltungen :
**DE-A- 3 332 293**
**DE-U- 6 609 423**
**US-A- 4 205 365**
**US-A- 4 417 298**
**"Lexikon der Physik", 3. Auflage, Bd. 2, S.
776-778, Stichwort "Kapillarität"**

(73) Patentinhaber : **Westermann, Wolfgang
Schellingstrasse 7
W-6800 Mannheim 1 (DE)**

(72) Erfinder : **Jöhnk, Kurt
Franz-Kugler-Strasse 8
W-6730 Neustadt/W. (DE)**
Erfinder : **Mayer, Dieter
Roteichenring 40
W-6800 Mannheim 1 (DE)**

(74) Vertreter : **Altenburg, Udo, Dipl.-Phys. et al
Patent- und Rechtsanwälte
Bardehle-Pagenberg-Dost-Altenburg-Frohwitter
& Partner Postfach 86 06 20
W-8000 München 86 (DE)**

EP 0 191 914 B2

## Beschreibung

Die vorliegende Erfindung betrifft einen Kunststoffolien-Wickelkondensator, insbesondere einen Flachwickelkondensator gemäß Oberbegriff des Anspruchs 1 oder 2, wie er z. B. aus der US-A-4 255 779 bekannt ist.

Es sind Kunststoffolien-Wickelkondensatoren in Chipbauweise bekannt, vgl. z. B. DE-OS-3 320 257, die mit duroplastischen Kunststoffpreßmassen umhüllt sind und die an ihren Stirnseiten Anschlußelemente aus dünnem Blech aufweisen. Beide Maßnahmen dienen dem Schutz des empfindlichen Wickelkondensatorkörpers vor Belastungen, die beim Tauchlöten durch direkten Kontakt des gesamten Wickelkondensatorkörpers mit flüssigem Zinn bei einer Temperatur von ca. 250°C und einer Lötdauer von ca. 5 sec auftreten. Die duroplastische, bei der Löttemperatur formstabil bleibende Umhüllung verhindert ein Aufbauchen des Wickelkondensatorkörpers, zu dem dieser aufgrund von zwischen den einzelnen Wickellagen eingeschlossener Luft und der Schrumpfung der gereckten Kunststoffolien tendiert. Die Anschlußelemente aus dünnem Blech mit einer Stärke ab vorzugsweise 0,1 mm bilden einen guten Wärmewiderstand zum Wickelkondensatorkörper hin.

Die Umhüllungstechnik mit duroplastischen Kunststoffpreßmassen weist jedoch bei Kunststoffolienkondensatoren einige Unzulänglichkeiten auf. Der Umhüllungsprozeß muß bei hohen Drücken und Temperaturen zwischen 150 und 180°C durchgeführt werden, wodurch z. B. bei Dünnstfolienkondensatoren aus Polyester eine Schrumpfung der Kunststoffolien und eine Wärmebeschädigung des Dielektrikummaterials verursacht werden kann. Bei metallisierten regenerierfähigen Wickelkondensatoren bewirkt zudem der durch den Umhüllungsdruck hervorgerufene erhöhte Lagendruck im Wickelkondensatorkörper eine Beeinträchtigung der Regenerierfähigkeit und somit die Gefahr eines verschlechterten Isolationswiderstandes.

Des weiteren ist bei kleinen Bauelementen wie Chip-Kondensatoren die Wirtschaftlichkeit dieser Umhüllungstechnik dadurch beeinträchtigt, daß der Nutzungsgrad des eingesetzten Materials äußerst gering ist. Die Umhüllung am Endprodukt macht nur weniger als 10 % des eingesetzten Materials aus, während der Rest als Angußspinne anfällt. Ein Wiederverspritzen des Angußspinnenmaterials ist jedoch ausgeschlossen, da es sich um einen Duroplast handelt. Somit fällt nach der Verarbeitung über 90 % des eingesetzten teuren Kunststoffpreßmaterials als unvermeidlicher Ausschuß an.

Die Aufgabe der vorliegenden Erfindung besteht darin, einen einfacher und wirtschaftlicher herstellbaren Kunststoffolien-Wickelkondensator in Chipbauweise mit verbesserten elektrischen Eigenschaften zu schaffen, der beim Lötvorgang zur Befestigung an einer Leiterplatte auch formstabil ist und guten Wärmewiderstand der Anschlüsse aufweist.

Diese Aufgabe wird erfindungsgemäß durch einen Kunststofffolien-Wickelkondensator gemäß Anspruch 1 oder 2 gelöst. Durch die erfindungsgemäße Verwendung der für konventionelle bedrahtete Wickelkondensatoren bekannten gießharzvergossenen Becherumhüllung für Chip-Kondensatoren mit aus der Umhüllung heraustretenden Anschlußblechabschnitten lassen sich alle Vorteile der mit dem bekannten Bechervergießverfahren hergestellten Kondensatoren für Chip-Kondensatoren nutzbar machen. Dieses Verfahren hat sich bei bedrahteten Kunststoffolien-Kondensatoren deswegen durchgesetzt, weil es kostengünstig mit geringem Materialaufwand bzw. Materialabfall und automatisiert mit hoher Produktivität realisiert werden kann, wobei gleichzeitig eine hohe Güte der Umhüllung, z. B. hohe Feuchtesicherheit erreicht wird. Der heutige Stand der Technik kennt moderne Dosieranlagen für Gießharz, welche die benötigten Mengen genau auf die Stückzahl der zu vergießenden Kondensatoren berechnen, so daß kein Überschuß als Abfall anfällt. Andererseits ist heute auch die Becherherstellung praktisch abfallfrei, insbesondere bei der Verwendung von thermoplastischen Materialien, deren Angußspinnen wieder vermahlen und somit erneut verspritzt werden können. Bei Verwendung eines Polyestermaterials mit einer Schmelz- bzw. Verarbeitungstemperatur zwischen 340°C bis 370°C als Bechermaterial zeigt die gießharzvergossene Becherumhüllung eines erfindungsgemäßen Chip-Kondensators während und nach dem Lötvorgang auf einer Leiterplatte selbst bei dünnsten Wandstärken ab 0,3 mm eine gleich gute Formstabilität wie die bekannten duroplastischen Preßmassenumhüllungen. Die gießharzvergossene Becherumhüllung des erfindungsgemäßen Chip-Kondensators wirkt sich nicht belastend auf die elektrischen Eigenschaften des Kunststoffolien-Wickelkondensators aus. Die gießharzvergossene Becherumhüllung umschließt den Wickelkondensatorkörper praktisch drucklos, so daß eine Beeinträchtigung der Regenerierfähigkeit verhindert werden kann. Da die Aushärtung bei Temperaturen von ca. 100°C oder tiefer stattfindet, ist auch eine Wärmevorschädigung des empfindlichen Dielektrikummaterials ausgeschlossen.

Aus der DE-GM-7 839 001 und der DE-GM 6 609 423 jeweils ein Kondensator bekannt, dessen Becherumhüllung an zwei sich gegenüberliegenden Schmalseiten der Mantelfläche Schlitze zur Aufnahme von Anschlußdrähten aufweist, die von der offenen Stirnfläche der Becherumhüllung ausgehen.

Die vorliegende Erfindung ist auch auf ein Verfahren zur Herstellung eines Kunststoffolien-Wickelkondensators mit einer solchen geschlitzten Becherumhüllung gerichtet.

Weitere Vorteile, Merkmale und Anwendungsmöglichkeiten der vorliegenden Erfindung ergeben sich aus

2

der nachfolgenden Beschreibung von Ausführungsbeispielen in Verbindung mit der Zeichnung. Darin zeigen:

Fig. 1 eine perspektivische schematische Darstellung eines nackten Wickelkondensatorkörpers mit Anschlußblechabschnitten,

Fig. 2 eine perspektivische schematische Darstellung einer Ausführungsform einer Becherumhüllung gemäß der vorliegenden Erfindung,

Fig. 3 eine perspektivische schematische Darstellung gemäß Fig. 2 nach Einführung des Wickelkondensatorkörpers gemäß Fig. 1, und

Fig. 4 eine perspektivische schematische Darstellung einer anderen Ausführungsform der Becherumhüllung gemäß der vorliegenden Erfindung.

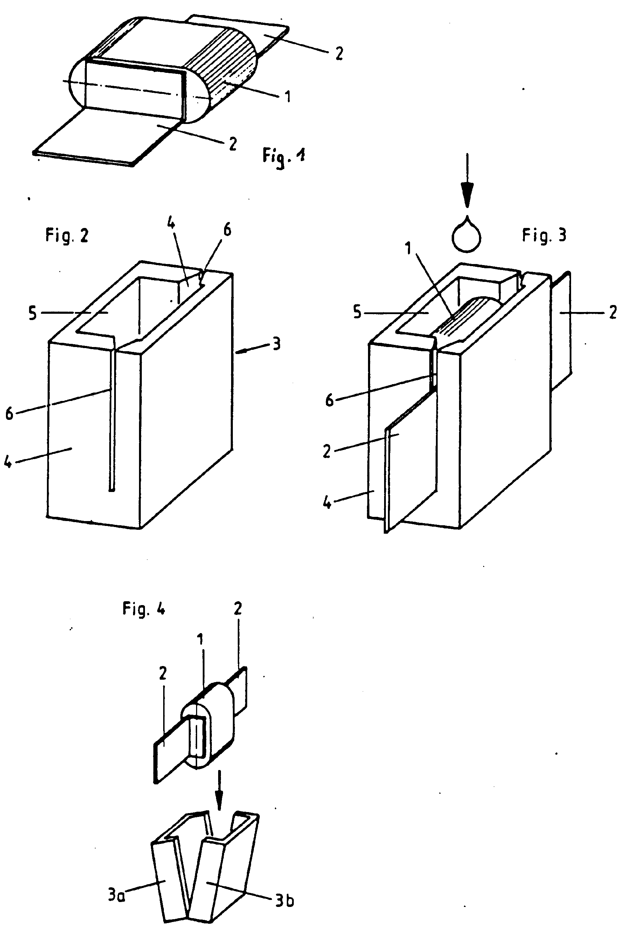

In Fig. 1 ist ein nackter Kunststoffolien-Wickelkondensator 1 mit metallisierten Kunststoffolien, mit stirnseitig kontaktierten Anschlußblechabschnitten 2, welche z. B. aus Neusilber bestehen können, dargestellt. In Fig. 2 ist eine Becherumhüllung 3 dargestellt, welche an den beiden Schmalseiten 4 von der Öffnung 5 der Becherumhüllung ausgehende Schlitze 6 aufweist. Diese Schlitze sind lippenförmig ausgebildet. Wie in Fig. 3 gezeigt ist, wird der in Fig. 1 dargestellte nackte Wickelkondensatorkörper 1 über die Öffnung 5 in die Becherumhüllung 3 eingeführt, wobei die Schlitze 6 die Anschlußblechabschnitte 2 aufnehmen und für diese als Austrittsöffnung dienen. Nach Stecken des Wickelkondensatorkörpers 1 in die Becherumhüllung 3 erfolgt ein Vorverguß mit einer geringen Harzmenge. Diese geringe Harzmenge soll nur der Fixierung des Wickelkondensatorkörpers in der Becherumhüllung dienen und gleichzeitig ein Aufsteigen von Gießharz in den Schlitzen 6 infolge Kapillarwirkung bis zur Oberkante der Becherumhüllung 3 bewirken. Nach Aushärtung des Vorvergusses ist in der Praxis überraschenderweise festgestellt worden, daß durch den Schlitz 6 und um die austretenden Anschlußblechabschnitte 2 herum kein Harz ausgetreten ist. Vielmehr hat das infolge Kapillarwirkung im Schlitz 6 befindliche Gießharz eine vollständige Abdichtung der Becherumhüllung 3 bewirkt. Der anschließende Nachverguß füllt die Becherumhüllung 3 bis zur Oberkante und schließt den Wickelkondensatorkörper 1 feuchtesicher ein. Anschließend werden die Anschlußblechabschnitte 2 durch Biegen bzw. Falzen an die Außenseite der Becherumhüllung 3 angelegt.

In Fig. 4 ist eine andere Ausführungsform der Becherumhüllung in Form von zwei Halbschalen 3a und 3b dargestellt, welche auf der in Fig. 4 unten dargestellten Seite gelenkig miteinander verbunden sind. Nach Einführen des Wickelkondensatorkörpers 1 in die aufgeklappten Halbschalen 3a und 3b werden die Halbschalen zusammengeklappt und der Gießharzverguß vorgenommen.

## Patentansprüche

1. Wickelkondensator mit metallisierten Kunststoffolien, einer zweifach gießharzvergossenen Becherumhüllung (3) und an den Stirnseiten des Kondensatorwickels (1) befestigten, aus der Becherumhüllung (3) nach außen herausgeführten Anschlußblechabschnitten (2),
dadurch gekennzeichnet, daß die Becherumhüllung (3) an ihren beiden Schmalseiten (4) von der Öffnung (5) der Becherumhüllung (3) ausgehende, lippenförmig ausgebildete Schlitze (6) aufweist, die eine Kapillarwirkung auf das Gießharz ausüben derart daß der erste Verguß im Schlitz bis zur Oberkante der Becherumhüllung reicht, und durch welche die Anschlußblechabschnitte (2) hindurchtreten, und daß die Anschlußblechabschnitte (2) nach dem Hindurchtreten durch die SchliKe (6) zur Ausbildung eines Chipkondensators auf die Außenseite der Becherumhüllung (3) umgebogen sind.

2. Wickelkondensator mit metallisierten Kunststoffolien, einer gießharzvergossenen Becherumhüllung (3) und an den Stirnseiten des Kondensatorwickels (1) befestigten, aus der Becherumhüllung (3) nach außen herausgeführten Anschlußblechabschnitten (2), dadurch gekennzeichnet, daß die Becherumhüllung aus zwei Halbschalen (3a, 3b) besteht, welche auf der der Öffnung der Becherumhüllung gegenüberliegenden Seite untereinander gelenkig verbunden sind, und daß die Anschlußblechabschnitte (2) zur Ausbildung eines Chipkondensators auf die Außenseite der Becherumhüllung umgebogen sind.

3. Verfahren zur Herstellung eines Kondensators gemäß Anspruch 1, dadurch gekennzeichnet, daß

a) der Wickelkondensatorkörper (1) in die Becherumhüllung (3) hineingesteckt wird, wobei die Schlitze (6) die Anschlußblechabschnitte (2) aufnehmen,

b) der Wickelkondensatorkörper (1) zur Fixierung in der Becherumhüllung (3) mit einer geringen Gießharzmenge vorvergossen wird, wobei ein Aufsteigen des Gießharzes im Schlitz infolge Kapillarwirkung bis zur Oberkante der Becherumhüllung (3) erfolgt,

c) nach der Aushärtung des Vorvergusses ein Nachverguß bis zur Oberkante der Becherumhüllung (3) erfolgt und

d) die Anschlußblechabschnitte (2) durch Umbiegen an die Außenseite der Becherumhüllung (3) angelegt werden.

3

EP 0 191 914 B2

## Claims

1. A wound capacitor with metallised plastic-film, a two-fold cast-resin cup encapsulation (3) and sheet metal connection elements (2) fastened to the end faces of the capacitor winding (1) and projecting outwardly from the cup encapsulation (3),
characterised in that, the cup encapsulation (3) comprises lip-shaped slits (6), which exert a capillary action on the casting resin, in such a way that the first casting in the slit extends as far as the upper edge of the cup encapsulation, the slits extending from the opening (5) of the cup encapsulation (3) on both of its narrow sides (4), through which slits the sheet metal connection elements (2) pass, and that the sheet metal connection elements (2) after passing through the slits (6) are bent around the outside of the cup encapsulation to form a chip capacitor.

2. A wound capacitor with metallised plastic-film, a cast-resin cup encapsulation (3) and sheet metal connection elements (2) fastened on the end faces of the capacitor winding (1) and projecting outwardly from the cup encapsulation (3), characterised in that the cup encapsulation consists of two half shells (3a, 3b) which are pivotably connected with one another on the side opposing the opening of the cup ecapsulation, and that the sheet metal connection elements (2) are bent around the outside of the cup encapsulation to form a chip capacitor.

3. A method for producing a capacitor in accordance with Claim 1, characterised in that,
a) the wound capacitor body (1) is inserted in the cup encapsulation (3), wherein the slits (6) accept the sheet metal connection elements (2),
b) the wound capacitor body (1) is initially cast with a small amount of resin to fix the cup encapsulation (3), whereby the casting resin rises in the slit due to capillary action up to the top edge of the cup encapsulation (3),
c) after hardening of the initial casting, a subsequent casting follows up to the top edge of the cup encapsulation (3) and
d) the sheet metal connection elements (2) are laid-over onto the outside of the cup encapsulation (3) by bending.

## Revendications

1. Condensateur bobiné à feuilles plastiques metallisées comportant une enveloppe en forme de godet (3) coulé en deux fois en résine ainsi que des sections de tôle de connexion (2) fixees sur les faces frontales de la bobine du condensateur (1) et ressortant à l'extérieur de l'enveloppe en godet (3),
caractérisé en ce que l'enveloppe en godet (3) présente sur ses deux petites faces (4) des fentes (6) en forme de lèvres partant de l'ouverture (5) de l'enveloppe en godet (3) et exerçant un effet de capillarité sur la résine de coulée de telle sorte que la première coulée dans la fente atteigne le bord supérieur de l'enveloppe en godet (3) et à travers lesquelles passent les sections de tôle de connexion (2), et en ce que les sections de tôle de connexion (2) sont recourbées sur l'extérieur de l'enveloppe en godet (3), après traversée des fentes (6), pour former un condensateur en forme de pastille.

2. Condensateur bobiné à feuilles plastiques métallisées, comportant une enveloppe en forme de godet (3) coulé en résine ainsi que des sections de tôle de connexion (2) fixées sur les faces frontales de la bobine du condensateur (1) ressortant à l'extérieur de l'enveloppe en godet (3), caractérisé en ce que l'enveloppe en godet est constituée de deux demi-coques (3a, 3b) qui sont réunies entre elles de manière articulée sur le côté opposé à l'ouverture de l'enveloppe en godet, et en ce que les sections de tôle de connexion (2) sont recourbées sur l'extérieur de l'enveloppe en godet pour former un condensateur en forme de pastille.

3. Procédé de fabrication d'un condensateur selon la revendication 1, caractérisé en ce que
a) le corps du condensateur bobiné (1) est inséré dans l'enveloppe en forme de godet (3), les fentes (1) recevant les sections de tôle de connexion (2),
b) le corps du condensateur bobiné (1) est préenrobé avec une petite quantité de résine de coulée, pour être fixé dans l'enveloppe en godet (3), la résine de coulée remontant dans une fente jusqu'au bord supérieur de l'enveloppe en godet (3), par capillarité,
c) après durcissement de la coulée préliminaire, une coulée complémentaire est faite jusqu'au bord supérieur de l'enveloppe en godet (3), et
d) les sections de tôle de connexion (2) sont appliquées par pliage sur l'extérieur de l'enveloppe en godet (3).

Fig. 1

Fig. 2

Fig. 3

Fig. 4